Europäisches Patentamt

European Patent Office

Office européen des brevets

(11) Publication number: **0 378 534 B1**

# EUROPEAN PATENT SPECIFICATION

(45) Date of publication of patent specification: **14.07.93** (51) Int. Cl.⁵: **D07B 1/06**, B60C 9/00

(21) Application number: **88904308.9**

(22) Date of filing: **01.06.88**

(86) International application number:
**PCT/BE88/00019**

(87) International publication number:
**WO 88/05624 (11.08.88 88/18)**

(54) HIGH-TENSILE STEEL CORD STRUCTURE.

<table>
<tr><td>

(43) Date of publication of application:
**25.07.90 Bulletin 90/30**

(45) Publication of the grant of the patent:
**14.07.93 Bulletin 93/28**

(84) Designated Contracting States:
**AT BE DE FR GB IT LU NL**

(56) References cited:
**EP-A- 144 811      EP-A- 168 857
FR-A- 2 464 834      GB-A- 2 034 363
GB-A- 2 081 765      US-A- 4 738 096**

**Patent Abstracts of Japan, volume 10, no. 37
(M-453) (2094) 14 February 1986**

</td><td>

(73) Proprietor: **N.V. BEKAERT S.A.
Bekaertstraat 2
B-8550 Zwevegem(BE)**

(72) Inventor: **BOURGOIS, Luc
Kwadestraat 7
B-8748 Waregem-Desselgem(BE)**

</td></tr>
</table>

Rank Xerox (UK) Business Services
(3. 10/3.6/3.3. 1)

EP 0 378 534 B1

**Description**

The invention relates to a steel cord adapted for the reinforcement of rubber articles, and more particularly to a steel cord adapted for the reinforcement of the breaker of rubber tires and to a steel cord having a high-tensile strength and high fatigue limit and to its use in passenger tires.

A steel cord adapted for the reinforcement of rubber articles usually comprises steel filaments having a carbon content lying between 0.60 and 1.10 per cent by weight (e.g. 0.70 %, 0.83 % or 0.96 %). A typical low-cost steel composition is : a minimum carbon content above 0.65 %, a manganese content between 0.40 % and 0.70 %, a silicon content between 0.15 % and 0.30 % and a maximum sulphur and maximum phosphorus content of 0.03 %, all percentages being percentages by weight.

Of particular importance is the carbon equivalent Ce which is defined by the following equation :

$$Ce = \% \, C + 0.3 \times (\% \, Mn - 0.40)$$

where % C is the carbon content in per cent by weight

% Mn is the manganese content in per cent by weight.

The carbon equivalent determines the reinforcing action. The greater its value the greater the theoretically attainable tensile strength $R_m$.

Other, more expensive, steel compositions, which comprise e.g. elements such as chromium, may also be used.

The diameter of the individual filaments adapted for the reinforcement of rubber articles lies in the range of 0.05 mm to 0.80 mm, preferably in the range of 0.05 mm to 0.50 mm.

The exact value depends upon the particular steel cord structure, on the particular use and on the desired mechanical properties.

The steel filaments are usually provided with a coating which promotes the adherence of said steel filaments to the rubber. Such a coating conveniently comprises copper, zinc, brass or ternary brass alloy, or a combination of two or more different layers thereof. The thickness of the coating ranges from 0.05 to 0.40 micron, preferably from 0.12 to 0.30 micron. The coating can also be present in the form of a chemical primer which ensures good rubber penetration and adhesion.

A lot of simple steel cord constructions have already been developed. Among these, the n x δ steel cord construction is a well known construction. It is formed by n steel filaments, conveniently of equal diameter δ, which are twisted around each other with a twist pitch s. n is an integer and may have the values 3,4 or 5.

A well known drawback of this n x δ steel cord structure is that full rubber penetration is impossible if each individual steel filament contacts the other steel filaments along their entire length.

This drawback has been remedied by mechanically forming or preforming the individual steel filaments in such a way that in the resulting n x δ steel cord structure the steel filaments do not longer contact each other along their entire length. This particular structure is known as a n x δ open cord (OC) or penetration cord. Such open steel cord structures are disclosed in BE-A-879656 and in NL-A-8005088

A parameter which is suitable to quantify this mechanical formation or preformation is the part load elongation, abbreviated as PLE. This part load elongation is defined as the increase in length of the gauge length between a tension of 2.5 N and 50 N and may be expressed as a percentage of the original gauge length. The PLE-value predicts the behaviour of the steel cord when it is wound from a creel in a calendering installation under a certain pay-off tension. The greater the PLE-value the greater the remaining openness during this unwinding and hence, the better the rubber penetration during the subsequent tire manufacturing. The smaller the PLE-value the quicker the cord closes under the pay-off tension and the smaller the chance for full rubber penetration during the tire manufacturing.

GB-A-2.081.765 discloses a steel cord adapted for the reinforcement of the breaker of rubber tires. The steel cord consists of three steel filaments (3 x δ construction), which are twisted around each other with a predetermined twist pitch and which have a diameter δ. The part load elongation (PLE) lies between 0.2 and 1.2 % and the diameter δ lies between 0.12 and 0.4 mm.

Up to now all the n x δ cords in open versions have been treated in the same way, that is, no distinction has been made between them regarding the preformation to be applied to the different n x δ cords. However, the inventor has discovered that a distinction has to be made between a 4 x δ open cord or a 5 x δ open cord and a 3 x δ open cord.

The most commonly used open cords are 4 x δ and 5 x δ cords. They are based on filaments having a diameter δ ranging from 0.22 to 0.25 mm. The inventor has discovered that a drawback of these 4 x δ and 5 x δ steel cords is their high PLE-value. Tire analysis has proved that 4 x 0.25 and 5 x 0.25 open steel cords show good rubber penetration only when the PLE-value is greater than 0.50 - 0.60 %. However, this gives a more irregular cord resulting in lower tensile and compression modulus causing lower steering and cornering properties of the tire as a final result.

It is an object of the present invention to avoid the drawbacks of the prior art constructions.

It is another object of the present invention to provide a 3 x $\delta$ steel cord construction which has enhanced tensile strength properties.

Another object of the present invention is to provide a steel cord with full and uniform rubber penetration independent of the pay-off tension used in the tire building process.

According to a first aspect of the present invention there is provided a steel cord adapted for the reinforcement of the breaker of rubber tires, said steel cord consisting of three steel filaments which are twisted around each other with a predetermined twist pitch and which have a diameter $\delta$, said steel cord having a part load elongation between 0.2 and 0.45 % and by a high tensile strength $R_m$ and by a diameter $\delta$ in the range of 0.27 mm to 0.35 mm.

In a preferable embodiment the steel cord according to the invention has a super high tensile strength $R_m$.

In a most preferable embodiment the steel cord according to the invention has a twist pitch of 14 mm.

The twist pitch is the axial distance required to make a 360 degree revolution of any steel filament in the steel cord.

A steel cord has a high tensile strength if the tensile strength $R_m$ is more than

$$2250 - 1130 \log d \ (N/mm^2) \qquad (1)$$

wherein d is the diameter in mm of the individual steel filaments.

A super high tensile steel cord has a tensile strength $R_m$ which is at least 6 per cent greater than the value according to formula (1).

More detailed values will be given below.

A 3 x $\delta$ steel cord adapted for the reinforcement of rubber tires consists of three filaments having a diameter between 0.27 and 0.35 mm. These values are needed in order to have sufficient stiffness. They are higher than the diameters used in 4 x $\delta$ and 5 x $\delta$ open cords for breaker reinforcement. These higher values give as a result that relatively low PLE-values (between 0.35 and 0.50) remain optimal for rubber penetration even when a prestress of 20 N is applied.

According to a second aspect of the present invention there is provided a rubber product comprising a steel cord according to the first aspect of the present invention. Such a rubber product may be a rubber hose, a rubber belt or a rubber tire. However, the steel cord according to the first aspect of the present invention is preferably used in a passenger tire.

The invention will now be described with reference to the accompanying drawings wherein
-   figure 1 represents a cross-section of a steel cord according to the invention ;
-   figure 2 represents a longitudinal view of a steel cord according to the invention ;
-   figures 3, 4 and 5 represent different ways of manufacturing a steel cord according to the invention.
-   figure 6 represents a use of steel cords according to the invention.

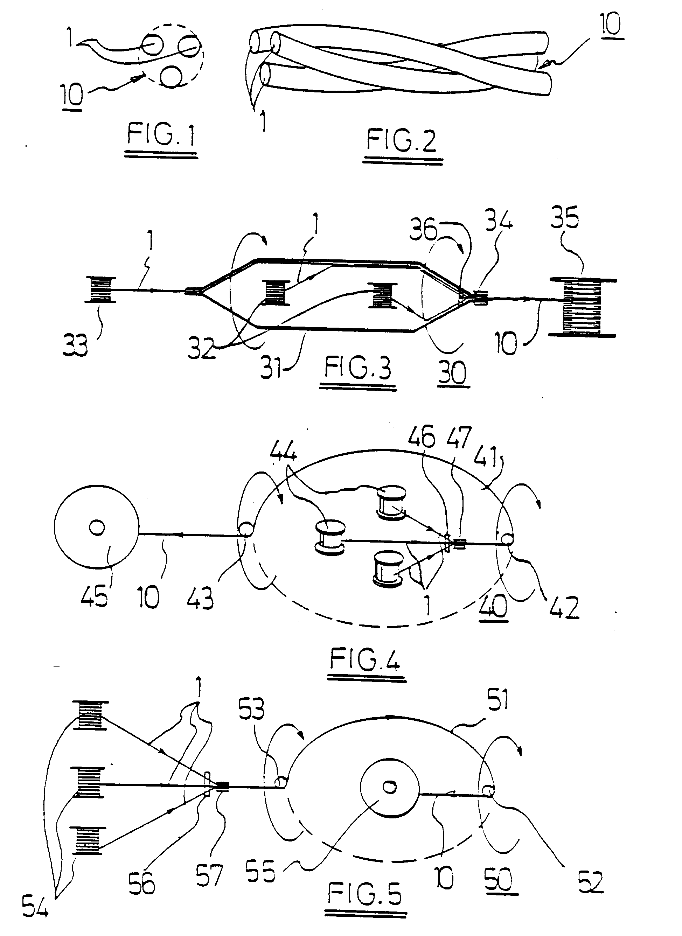

Figures 1 and 2 represent a steel cord 10 according to the invention. The three individual steel filaments 1 do not contact each other along their length and, as a consequence, allow full rubber penetration.

A high tensile steel filament may be manufactured in the following way. Wire rod is cold drawn from a start diameter $d_s$ between 5.5 and 6.5 mm to a steel wire with an intermediate diameter $d_i$ which lies between 0.80 and 2.50 mm. The steel wire is then patented, i.e. heated to a temperature above 900 °C followed by an immersion in a quench-transformation bath (e.g. a molten lead bath) at a temperature between 450 and 700 °C and by a cooling to ambient temperature. The steel wires are plated with brass and are subsequently wet drawn from the intermediate diameter $d_i$ to steel filaments having a final diameter $d_f$ which lies between 0.05 and 0.80 mm.

The exact value of the tensile strength $R_m$ depends, among others, on
-   the final diameter,
-   the reduction during the wet drawing operation, and on
-   the steel composition.

As a matter of example table 1 gives for different steel filaments the intermediate diameter $d_i$, the final diameter $d_f$, the reduction according to the equation

$$\epsilon = 2 \ln \frac{d_i}{d_f} \qquad (2)$$

the percentage reduction in surface R according to the equation

$$R = \frac{d_i^2 - d_f^2}{d_i^2} \times 100 \qquad (3)$$

and the achieved high tensile strength $R_m$.

Table 2 gives the same data but for a super high tensile $R_m$.

All these steel filaments had a low-cost steel composition with a carbon equivalent Ce of 0.875 % and a carbon content % C between 0.80 and 0.85 per cent by weight.

TABLE 1

| HIGH TENSILE STEEL FILAMENTS | | | | |
|---|---|---|---|---|
| $d_i$ (mm) | $d_f$ (mm) | $\epsilon$ | R (%) | $R_m$ (N/mm$^2$) |
| 1.50 | 0.28 | 3.36 | 96.5 | 3100 |
| 1.50 | 0.30 | 3.21 | 96.0 | 3000 |
| 1.50 | 0.32 | 3.09 | 95.4 | 2900 |
| 1.62 | 0.35 | 3.06 | 95.3 | 2850 |

TABLE 2

| SUPER HIGH TENSILE STEEL FILAMENTS | | | | |
|---|---|---|---|---|
| $d_i$ (mm) | $d_f$ (mm) | $\epsilon$ | R (%) | $R_m$ (N/mm$^2$) |
| 1.69 | 0.28 | 3.60 | 97.3 | 3400 |
| 1.76 | 0.30 | 3.54 | 97.1 | 3350 |
| 1.82 | 0.32 | 3.48 | 96.9 | 3250 |
| 1.95 | 0.35 | 3.44 | 96.8 | 3220 |

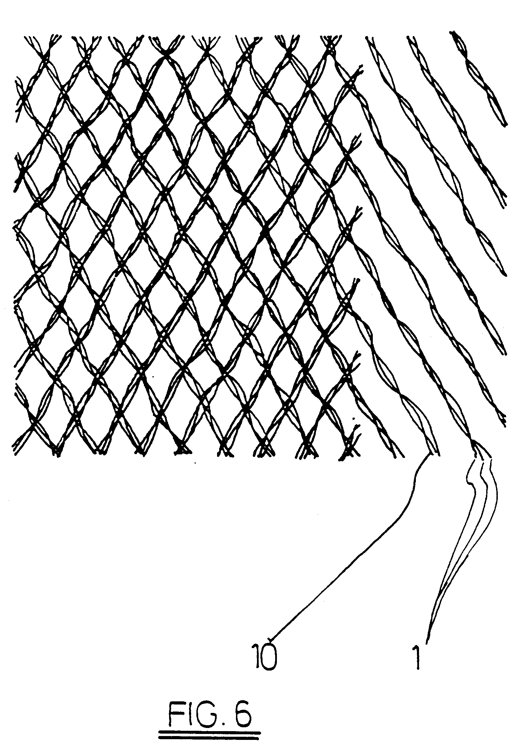

The steel cord according to the invention may be manufactured by a conventional tubular strander 30 (figure 3) or by a conventional double twister 40 (figure 4) or 50 (figure 5).

Referring to figure 3 two pay-off bobbins 32 are positioned in stationary cradles at the inside of the drum 31 and one pay-off bobbin 33 is positioned outside the drum 31. While the drum 31 is rotating, the filaments 1 are drawn from the bobbins 32, 33 and form the cord 10 at the cabling die 34. The formed cord 10 is wound on the bobbin 35. The preformation of the cords is given at 36 just before the cabling die 34.

Referring to figure 4 three pay-off bobbins 44 are located inside the rotatable flyer 41 of a double twister 40. The steel filaments 1 are drawn from the bobbins 44, pass over a preformer 46 and through a die 47, are given a first twist and pass over a first pulley 42 to the flyer 41, subsequently over a second pulley 43 after which they are given a second twist. The formed cord 10 is wound upon a bobbin 45 which is located outside the double twister 40.

A double twister may also be used in another way. This is represented on figure 5. Three pay-off bobbins 54 are located outside the double twister 50, whereas the winding unit 55 is located inside the flyer 51. The steel filaments are drawn from the bobbins 54, pass over a preforming plate 56 and through a die 57, converge towards each other and are given a first twist, then they pass over a pulley 53, a flyer 51 to a pulley 52, after which they are given a second twist. The formed cord 10 is subsequently wound upon the winding unit 55.

In a preferable embodiment of the double twisters 40 and 50 the pulleys 42, 43 resp. 52, 53 allow the twists to travel along their path.

The rubber products according to the second aspect of the present invention may be obtained by introducing a plurality of steel cords according to a first aspect of the invention in an unvulcanized rubber composition and then vulcanizing the whole. In general, the steel cords are firstly impregnated in an adhesion rubber composition. Such adhesion rubber conveniently comprises 40 to 70 parts of carbon black per 100 parts of rubber, 2 to 6 parts of coumarone resin, 4 to 12 parts of Zinc oxide and 1 to 5 parts of sulphur, and further no more than 10 parts in total of antioxidant or accelerator or other agents, all parts being parts by weight.

In the case the steel cords are used as reinforcement of a belt or breaker ply of a passenger tire, the steel cords are laid side by side to form a foil of one or more superposed layers of cords and this foil is covered on either side with a foil of unvulcanized adhesion rubber which enters between and, thanks to their openness, into the cords. The whole composite is cut into strips and the result is a strip of cord pieces, lying side by side in one or more superposed layers, and impregnated with unvulcanized adhesion rubber.

Figure 6 represents a view of how the steel cords according to the invention with a PLE-value of 0.40 are used in the breaker of a passenger tire. There are two belt or breaker plies. In each ply the steel cords 10 are parallel to each other and form a certain angle to the direction of movement of the tire. As may be easily seen, the steel cord still has an openness which is great enough to allow rubber penetration notwithstanding the use of a pay-off tension in the calendering installation.

Table 3 mentions some values of "ends per dm" and some "packing factors" when the steel cord according to the invention is used in different types of passenger tires.

"Ends per dm" is the number of steel cords used per dm of ply length.

The "packing factor" is equal to the maximum diameter of the cord in mm multiplied by the "ends per dm".

## TABLE 3 : USE OF THE STEEL CORD ACCORDING TO THE INVENTION IN PASSENGER TIRES

|  | 3x0.28 PLE=0.20 SHT | 3x0.28 PLE=0.40 SHT | 3x0.30 PLE=0.20 SHT | 3x0.30 PLE=0.40 SHT |
|---|---|---|---|---|
| tire: 165SR13 |  |  |  |  |
| ends per dm | 77-91 | 77-91 | 64-76 | 64-76 |
| packing factor | 48-57 % | 73-87 % | 49-59 % | 69-82 % |
| tire: 175SR14 |  |  |  |  |
| ends per dm | 64-143 | 64-91 | 53-92 | 53-69 |
| packing factor | 40-89 % | 61-87 % | 41-71 % | 57-82 % |
| tire: 185SR14 |  |  |  |  |
| ends per dm | 70 | 70 | 59 | 59 |
| packing factor | 44 % | 67 % | 45 % | 63 % |
| tire: 195SR14 |  |  |  |  |
| ends per dm | 77-78 |  |  |  |
| packing factor |  |  |  |  |

The mentioned values generally do not indicate the limits of possible realisations. They only mean that it is possible to realize a specified type of passenger tire with the mentioned parameters.

A 3 x $\delta$ super high tensile (SHT) open cord (OC) adapted for the reinforcement of a breaker ply for a passenger tires has been compared with other existing steel cord constructions which are also suitable for the reinforcement of a breaker ply for passenger tires.

The stiffness in rubber has been measured by the well known three-point-bending test.

The rubber penetration is the amount of air passing through a rubber block (224 mm long, 15 mm high, and 265 mm wide), in which four identical steel cord constructions are embedded, at a 4 bar air pressure difference.

A pretension of 20 N is also applied to check the processing influence of the pay-off tension.

The fatigue limit has been determined by the Hunter test.

Table 4 summarizes the comparative results.

### TABLE 4 - COMPARISON WITH OTHER CORDS

| | INVENTION | | PRIOR ART | | | |
|---|---|---|---|---|---|---|
| | 3x0.30 OC-SHT s=16mm | 3x0.28 OC-SHT s=14mm | 2+2x0.25 s=14mm | 4x0.25 OC s=14mm | 2x0.30 HT s=14mm | 2+1x0.30 HT s=16mm |
| tensile strength (N) | 678 | 565 | 530 | 530 | 445 | 685 |
| cord diameter (mm) | 0.73 | 0.65 | 0.66 | 0.62 | 0.60 | 0.77 |
| max. cord diameter (mm) | 1.09 | 0.96 | 0.73 | 0.91 | 0.63 | 0.85 |
| linear density (g/m) | 1.68 | 1.47 | 1.55 | 1.56 | 1.12 | 1.67 |
| cord stiffness in rubber (N.mm$^2$) | 258 | 207 | 251 | 178 | 200 | 408 |
| rubber penetration (1/h) at 4 bar | 0 | 0 | 0 | 0 | 0 | 0 |
| - with 20 N tension to the cord | 0 | 0 | 0 | 20 | 0 | 0 |
| fatigue limit in rubber (N/mm$^2$) | 950 | 1000 | 630 | 980 | 1050 | 600 |
| PLE (%) | 0.37 | 0.40 | 0.14 | 0.50 | 0.16 | 0.14 |

The steel cord according to the invention has a high tensile strength and a high stiffness in rubber, it allows full rubber penetration even in prestressed condition and maintains a high level of fatigue.

A 4 x 0.25 open cord with a PLE-value of 0.50 % has only full rubber penetration when it is not put under tension. As indicated in table 4 a tension of 20 N results in incomplete rubber penetration. This is due to the fact that cords comprising filaments with a diameter between 0.23 and 0.25 mm are less stiff than cords comprising filaments with a diameter between 0.27 and 0.35 mm.

All the other prior art constructions mentioned in table 4 allow full and uniform rubber penetration even when put under a tension of 20 N, but
- a 2 + 2 x 0.25 cord has a low fatigue limit,
- a 2 + 1 x 0.30 cord also has a low fatigue limit,
- a 2 x 0.30 cord has a low tensile strength.

In order to optimize the twist pitch s four steel cords according to the invention with different values of the twist pitch s have been compared with each other.

Table 5 summarizes the results. The values of compression strength and compression modulus are relative values since the absolute values are of no importance.

## TABLE 5 - INFLUENCE OF THE TWIST PITCH

### 3 x 0.28   OC-SHT   PLE = 0.40 %

| twist pitch s (mm) | 10 | 12.5 | 14 | 16 |
|---|---|---|---|---|
| breaking load (N) | 578 | 581 | 586 | 585 |
| breaking strength $R_m$ (N/mm$^2$) | 3071 | 3088 | 3117 | 3118 |
| elongation at fracture (%) | 3.5 | 3.4 | 3.3 | 3.0 |
| compression strength | 100 | 126.1 | 159.4 | 146.5 |
| compression modulus | 100 | 146.8 | 175.9 | 163.3 |

The optimal value of the twist pitch s is 14 mm because of its higher compression strength and compression modulus.

**Claims**

1. A steel cord adapted for the reinforcement of the breaker of rubber tires, said steel cord consisting of three steel filaments which are twisted around each other with a predetermined twist pitch and which have a diameter $\delta$ (3 x $\delta$ construction), said steel cord having a part load elongation between 0.2 and 0.45%, a high tensile strength $R_m$ and a diameter $\delta$ lying in the range of 0.27 to 0.35 mm.

2. A steel cord according to claim 1, characterized by a super high tensile strength $R_m$.

3. A steel cord according to claim 1 or 2, characterized in that said twist pitch is 14 mm.

4. A rubber product characterized in that said rubber product comprises a steel cord according to claim 1.

5. A rubber passenger tire having a width between 155 mm and 195 mm and a rim between 12 inch (305 mm) and 15 inch (381 mm) and comprising one to four belt plies, characterized in that said belt plies are reinforced with a steel cord according to claim 1 in such a way that said belt plies have 50 to 144 ends per dm and a packing factor between 40 and 90 %.

8

**Patentansprüche**

1. Stahlseil zum Verstärken der Einlage von Gummireifen, wobei das Stahlseil aus drei Stahldrähten besteht, die mit einer vorgegebenen Windungssteigung umeinander gewunden sind und einen Durchmesser $\delta$ (3 x$\delta$-Konstruktion) haben, und wobei das Stahlseil eine Teillastlängung zwischen 0,2 und 0,45%, eine Hoch-Zugfestigkeit $R_m$ und einen Durchmesser $\delta$ im Bereich von 0,27 bis 0,35 mm hat.

2. Stahlseil nach Anspruch 1, **gekennzeichnet** durch eine Super-Hoch-Zugfestigkeit $R_m$.

3. Stahlseil nach Anspruch 1 oder 2, **dadurch gekennzeichnet,** daß die Windungssteigung gleich 14 mm ist.

4. Gummiprodukt, **dadurch gekennzeichnet,** daß das Gummiprodukt ein Stahlseil gemäß Anspruch 1 enthält.

5. Gummireifen für Passagierfahrzeuge mit einer Breite zwischen 155 mm und 195 mm sowie einem Felgenmaß zwischen 12 Zoll (305 mm) und 15 Zoll (381 mm), umfassend eine bis vier Gürtellagen, **dadurch gekennzeichnet,** daß die Gürtellagen mit einem Stahlseil gemäß Anspruch 1 verstärkt sind, derart, daß die Gürtellagen 50 bis 144 Enden pro dm und einen Packfaktor zwischen 40 und 90% haben.

**Revendications**

1. Câblé d'acier destiné à l'armature de la nappe sommet de pneumatiques de caoutchouc, le câblé d'acier étant formé de trois filaments d'acier qui sont retordus mutuellement avec un pas prédéterminé de torsion et qui ont un diamètre $\delta$ (construction 3 x $\delta$), le câblé d'acier ayant un allongement sous charge partielle compris entre 0,2 et 0,45 %, une résistance élevée à la traction $R_m$ et un diamètre $\delta$ compris entre 0,27 et 0,35 mm.

2. Câblé d'acier selon la revendication 1, caractérisé par une résistance extrêmement élevée à la traction $R_m$.

3. Câblé d'acier selon la revendication 1 ou 2, caractérisé en ce que le pas de torsion est de 14 mm.

4. Produit de caoutchouc caractérisé en ce qu'il contient un câblé d'acier selon la revendication 1.

5. Pneumatique de caoutchouc pour véhicule de transport de passagers, ayant une largeur comprise entre 155 et 195 mm et une jante comprise entre 305 et 381 mm (12 et 15 pouces), et comprenant une à quatre nappes de ceinture, caractérisé en ce que les nappes de ceinture sont armées par un câblé d'acier selon la revendication 1 de manière que les nappes de ceinture possèdent 50 à 144 extrémités par décimètre avec un facteur de remplissage compris entre 40 et 90 %.

FIG.1

FIG.2

FIG.3

FIG.4

FIG.5

FIG. 6